# EUROPEAN PATENT SPECIFICATION

(11) **EP 0 500 238 B1**
(45) Date of publication and mention of the grant of the patent: **10.04.1996**
(21) Application number: 92301016.9
(22) Date of filing: 06.02.1992
(51) Int. Cl.: H04L 12/56

(54) **Header translation unit for an ATM switching system**
Kopfübersetzungseinheit für ein ATM-Vermittlungssystem
Unité de traduction d'en-tête pour système de commutation ATM

(30) Priority: 20.02.1991 GB 9103489
(43) Date of publication of application: 26.08.1992
(73) Proprietor: ROKE MANOR RESEARCH LIMITED, Romsey, Hampshire, SO51 0ZN (GB)
(72) Inventor: Stewart, Ian Bernard, North Baddesley, Southampton SO52 9ND (GB)
(74) Representative: Allen, Derek

(56) References cited:
- EP-A- 0 254 270
- INTERNATIONAL SWITCHING SYMPOSIUM vol. 2, 1990, STOCKHOLM SE pages 35 - 44; D. G.FISHER ET AL.: 'A FLEXIBLE NETWORK ARCHITECTURE FOR THE INTRODUCTION OF ATM'

## Description

This invention relates to exchange termination apparatus of an asynchronous transfer mode, (ATM) switching system.

Current public switched telephone network (PSTN) exchanges switch data in the form of a flow of digital information. This data is transmitted at a constant rate (usually 64 thousand bits of information per second) and this rate cannot be varied. This switching technique is called a synchronous transfer mode, (STM) switching system.

A new switching technique is currently under development by all the major telecommunications equipement manufacturers. This new technique is called an asynchronous transfer mode (ATM) switching system. The basic idea of ATM is to group data which has to be switched into standard-sized packets, called cells. These cells may be sent from a customer to the exchange at different rates, depending upon the type of data to be sent. For example, a telephone conversation would take the form of a constant flow of cells, with one sent every six milliseconds. On the other hand, a connection from a local area network would send a burst of cells (in a communication from one computer to another) at almost random times. It is this ability of ATM to handle widely different forms of data and different data rates (something which current exchanges find impossible or cannot easily do) which makes the techniques so attractive.

One example of an ATM network is disclosed in the document entitled "A Flexible Network Architecture for the Introduction of ATM" by D. G. Fisher, N. Tat and A. Berglund, International Switching Symposium, Session A3, paper 6, vol. 2, 1990, page 35 to page 44. The architecture described employs building blocks interconnected by standard interfaces, which may be combined in different configurations to represent stages in the evolutionary process towards Broadband ISDN based on the asynchronous transfer mode operation. The architecture includes the use of contents addressable memories which are located at the switch board, and are used to translate cell headers so that the correct switching of cells across the switching network is accomplished. The use of the contents addressable memories have the effect of reducing the control memory size.

A further example of the use of a contents addressable memory is disclosed in EP-A-0254270. This patent discloses a generalised contents addressable memory implementation for a translator. The translator uses a dual contents addressable memory approach in order to speed up the operation of the translator. In its application it is used for translating virtual addresses into physical addresses.

The basic principles of ATM are already defined by CCITT standards, and the main definition is contained in recommendation I.121. Attention is also directed to a paper entitled 'An ATM Switch Implementation-Technique & Technology', by Ingemar Gard and Jan Rooth, published in International Switching Symposium Proceedings Vol. IV page 23 (May/June 1990).

An exchange termination (ET) in any exchange equipment comprises apparatus via which the actual data which is to be switched enters the system. This data may come directly from a customer's premises (e.g. a connection from a home, or from a business), or from other exchanges or line concentrators. Usually there is one exchange termination (ET) for each physical connection entering an exchange equipment.

Part of the function of an exchange termination (ET) is to effect the 'look-up' of data relating to a particular virtual call from one or more memory tables. Address access to these memory tables is derived from two contiguous fields in an ATM cell header, termed respectively the virtual path identifier (VPI) and the virtual channel identifier (VCI), and together they define a logical address. Taken together these two fields yield a 24-bit wide logical address, giving a potential for 2⁴ simultaneous virtual connections.

The total number of simultaneous virtual connections supported on a single ET may typically be 2048, or 2¹¹. Therefore, it can be seen that a mapping function is required between the 2⁴ possible logical addresses and the 2¹¹ physical addresses used to address the physical memory tables.

According to the present invention there is provided an exchange termination apparatus of an asynchronous transfer mode switching system, characterised in that said exchange termination apparatus comprises a contents addressable memory unit to effect a mapping function between a plurality of logical addresses and a plurality of physical addresses, a policing and header translation unit to which incoming asynchronous transfer mode data cells are fed, a random access memory unit, and an exchange termination control unit, wherein said contents addressable memory unit is responsive to virtual path identifier and/or virtual channel identifier address data in the cells for addressing the random access memory unit thereby to translate the incoming cell data to provide an output signal from the apparatus.

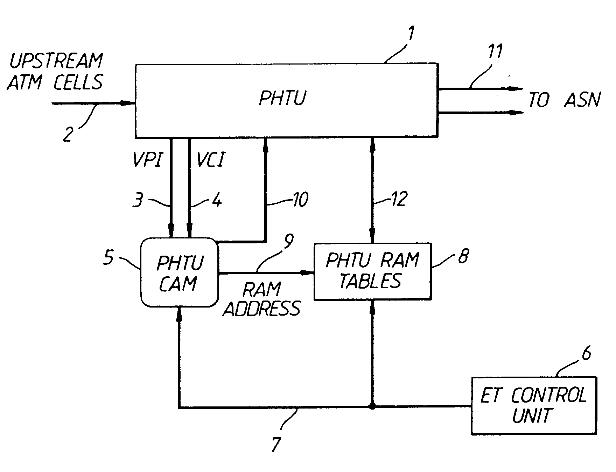

One embodiment of the invention will now be described, by way of example, with reference to the accompanying drawing; which is a block schematic diagram of exchange termination apparatus for an asynchronous transfer mode switching system.

The apparatus comprises a policing and header translation unit (PHTU) 1 which is arranged to receive on a line 2 ATM data cells. The PHTU 1 is coupled to a PHTU contents addressable memory (CAM) 5 via lines 3 and 4. The PHTU CAM 5 is controlled by a microprocessor which serves as an exchange termination (ET) control unit 6 which is coupled to the PHTU CAM 5 via a line 7.

ln operation of the apparatus, when a virtual call is established, the ET control unit 6 programs the PHTU CAM 5 for translation of the logical address hereinbefore mentioned, which is fed thereto on the lines 3 and 4, to a physical address contained within a PHTU random access memory (RAM) unit 8, which unit 8 is fed from the PHTU CAM 5 via a line 9, and fed also from the ET control unit 6 via the line 7.

Thus when an ATM data cell arrives at the PHTU 1, VPI and VCI data which define the logical address field are extracted from the header of the ATM data cell and passed to the PHTU CAM 5. The PHTU CAM 5 performs a comparison on these two fields to see if they match any values programmed therein by the ET control unit 6. If this is the case and matching values are found, the PHTU CAM 5 will provide an output signal on the line 9, which corresponds to the physical address for this particular match for storage in the PHTU RAM unit 8, and additionaly, it will provide a signal via a line 10 which serves to indicate to the PHTU 1 that a match has been found.

If a match is not found, due for example to the call not being connected, an appropriate 'no match' condition will be indicated to the PHTU 1 by means of an appropriate 'no match' signal on the line 10.

In operation of the apparatus, when a virtual call is established, the ET control unit 6, which comprises a microprocessor, programs the PHTU CAM 5 for a translation between the logical address and the physical address in the PHTU RAM tables 8. When an ATM data cell arrives at the PHTU 1, VPI and VCI data which define the logical address fields are extracted from the ATM data cell and passed to the PHTU CAM 5. The PHTU CAM 5 performs a comparison on these two fields to see if they match any values programmed therein by the ET control unit 6. If this is the case, the PHTU CAM 5 provides an output signal on line 10 which corresponds to the programmed physical address for this particular match. and indicates a positive match to the PHTU 1. If a match does not occur (due, for example, to the call not being connected) the output signal on line 10 will go 'inactive' so as to indicate this.

The main function of the PHTU 1 is to translate the incoming ATM cell data into a form which can be switched by an ATM switch network ASN (not shown) which is fed from output lines 11 of the PHTU 1, by utilising information contained in the PHTU RAM lookup tables 8, which is transfered from the PHTU RAM to the PHTU via a line 12. The precise functions are not relevant to this application.

The important fact is that the PHTU RAM tables 8 are in effect addressed in accordance with the VPI and VCI fields in the cell header by the PHTU CAM 5.

The PHTU 1 may be implemented as two applicaiion-specific integrated circuits (ASICs), one for a header translation unit (HTU) and one for a policing unit (PU) which in combination comprise the PHTU 1 and which are not shown in the drawing..

For simplicity, the use of the PHTU CAM 5 with the PHTU 1 only has been described. Its use is equally relevant however, for use at any other point within a system where it is necessary to reference stored information based upon a VPI/VCI address.

Since the PHTU CAM 5 serves a hardware function, it may be implemented as a single VLSI component. Alternatively however, it mav be realised as a group of lower-complexity components or as an integral part of a VLSI component which serves a complex function.

The use of the PHTU CAM 5 in this application allows complete flexibility between logical and physical addresses, and thus no restrictions are imposed on the allocation of VPI and VCI values.

A special feature of the PHTU CAM 5 described herein is the potential to map more than one logical VPI/VCI combined value to the same physical address. This potential is based on the value of the VPI field. If the VPI value is found by the PHTU CAM 5 to match a programmed value, then a comparison involving the VCI field may be optionally not effected, and in this case the address stored in the PHTU RAM 8 will be based solely on the VPI value. This allows a 'VPI Pipe' containing a range of VCIs to be switched through to the ATM switch network (ASN) using the same route.

In a similar way, the PHTU CAM 5 may be programmed to ignore VPI values, and to look for matches on VCI values only.

In its most flexible implementation, the PHTU CAM device 5 may be programmed to look for matches either on VPI values only, or matches on VCI values only, or matches on both VPI and VCI values combined.

## Claims

1. An exchange termination apparatus of an asynchronous transfer mode switching system, characterised in that said exchange termination apparatus comprises a contents addressable memory unit (5) to effect a mapping function between a plurality of logical addresses and a plurality of physical addresses, a policing and header translation unit (1) to which incoming asynchronous transfer mode data cells are fed, a random access memory unit (8), and an exchange termination control unit (6), wherein said contents addressable memory unit (5) is responsive to virtual path identifier and/or virtual channel identifier address data in the cells for addressing the random access memory unit (8) thereby to translate the incoming cell data to provide an output signal from the apparatus.

2. An exchange termination apparatus as claimed in Claim 1, wherein the output signal is provided by the policing and header translation unit (1) and comprises ATM cell data in a form which can be switched by an asynchronous transfer mode switch network.

## Patentansprüche

1. Zellabschlußeinrichtung eines Vermittlungssystems mit asynchronem Übertragungsmodus,
**dadurch gekennzeichnet, daß**
diese Zellabschlußeinrichtung aufweist: Eine inhaltsadressierbare Speichereinheit (5) zum Ausführen einer Umsetzfunktion zwischen einer Vielzahl von virtuellen Adressen und einer Vielzahl von absoluten Adressen, eine Kontroll- und Kopfübersetzungseinheit (1), welcher einlangende Datenzellen im asynchronen Übertragungsmodus zugeführt werden, einen Direktzugriffspeicher (8) und eine Zellabschlußsteuereinheit (6), wobei die inhaltsadressierbare Speichereinheit (5) in Abhängigkeit von in den Zellen enthaltenen virtuellen Wegkennungs- und/oder virtuellen Kanalkennungsdaten zum Adressieren des Direktzugriffspeichers (8) eingerichtet ist, wodurch die einlangenden Zelldaten übersetzt werden und ein Ausgangssignal für die Einrichtung geliefert wird.

2. Zellabschlußeinrichtung nach Anspruch 1, bei welcher das Ausgangssignal von der Kontroll- und Kopfübersetzungseinheit (1) geliefert wird und ATM-Zelldaten in einer Form aufweist, die von einem Koppelnetzwerk mit asynchronem Übertragungsmodus verrnittelt werden kann.

## Revendications

1. Appareil de terminaison de central d'un système de commutation en mode de transfert asynchrone, caractérisé en ce que l'appareil de terminaison de central comporte une unité (5) de mémoire adressable par son contenu destinée à réaliser une fonction de mappage entre plusieurs adresses logiques et plusieurs adresses physiques, une unité (1) de traduction d'en-têtes et de police à laquelle sont transmises les cellules reçues de données en mode de transfert asynchrone, une unité (8) de mémoire à accès direct, et une unité (6) de commande de terminaison de central, dans lequel l'unité (5) de mémoire adressable par le contenu est commandée par des données d'adresse d'identificateur de trajet virtuel et/ou d'identificateur de canal virtuel des cellules pour l'adressage de l'unité (8) de mémoire à accès direct afin que les données reçues de cellules soient traduites et donnent un signal de sortie destiné à l'appareil.

2. Appareil de terminaison de central selon la revendication 1, dans lequel le signal de sortie est transmis par l'unité (1) de traduction d'en-têtes et de police et comprend les données des cellules (ATM) sous une forme qui peut être commutée par un réseau de commutation en mode de transfert asynchrone.
